(19) Europäisches Patentamt / European Patent Office / Office européen des brevets

(11) **EP 4 124 247 A1**

(12) **EUROPEAN PATENT APPLICATION**

(43) Date of publication:
01.02.2023 Bulletin 2023/05

(21) Application number: 21382726.4

(22) Date of filing: 30.07.2021

(51) International Patent Classification (IPC):
*A23L 33/105* (2016.01)   *A23B 7/16* (2006.01)
*A23L 19/00* (2016.01)   *A23P 10/30* (2016.01)

(52) Cooperative Patent Classification (CPC):
(C-Sets available)
**A23L 33/105; A23L 3/46; A23L 19/01; A23L 19/09;
A23P 10/30;** A23V 2002/00                (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Corporación Omega Zeta Andorra, SLU
500 Andorra la Vella (AD)**

(72) Inventors:
• **Maspoch Comamala, Daniel
  08197 Sant Cugat del Vallès (ES)**

• **Cano Sarabria, Antonia Maria
  30560 Murcia (ES)**
• **García Jimeno, Sonia
  08195 Sant Cugat del Vallès (ES)**
• **Martín Laplaza, Juan
  28010 Madrid (ES)**
• **Fradera Pellicer, Carlos
  08022 Barcelona (ES)**

(74) Representative: **Curell Suñol S.L.P.
Muntaner 240, 4º 2ª
08021 Barcelona (ES)**

(54) **METHOD OF MICROENCAPSULATION OF A COMPOSITION COMPRISING POLYPHENOLS AND POLYPHENOL OXIDASE, AND CORRESPONDING MICROENCAPSULATED PRODUCT AND FOOD COMPOUND**

(57)     The invention relates to a method of microencapsulation of a composition comprising polyphenols and polyphenol oxidase comprising the following steps:
[a] preparing an aqueous solution of chitosan and acetic acid,
[b] preparing a solution of a crosslinking agent (sodium tripolyphosphate or citric acid),
[c] preparing the composition with polyphenols and polyphenol oxidase,
[d] mixing solution [a] with composition [c],
[e] adding solution [b] to mixture [d], with stirring, and subsequently drying by atomization.
     The obtained microencapsulated products present a plurality of advantages:
- The microencapsulated product is resistant to the action of the polyphenols as well as to other components present in the compound of plant origin, presents good stability over time, has a positive zeta potential and a size suitable for the incorporation thereof in food compounds.
- It allows the microencapsulation of both hydrophilic compositions and lipophilic compositions, and it is suitable for use on an industrial level.
- The microcapsules are gastro-resistant and release their load at intestinal pH.
- Polyphenol oxidase activity is reduced.

(52) Cooperative Patent Classification (CPC): (Cont.)

C-Sets
A23V 2002/00, A23V 2200/02, A23V 2250/2132,
A23V 2250/511

**Description**

Field of the Invention

The invention relates to a method of microencapsulation of a composition comprising polyphenols and polyphenol oxidase and to the corresponding microencapsulated product.

The invention also relates to a food compound comprising microencapsulated products according to the invention.

In general, the invention relates to a technique the purpose of which is to achieve stable products comprising polyphenols preferably derived from plants.

State of the Art

Edible plants provide minerals, vitamins, water, and fiber, as well as phytochemicals, to a greater or lesser extent, depending on the type of plant. Among phytochemicals, there is a large group of phenol-derived molecules, particularly polyphenols. Polyphenols are extremely labile antioxidant molecules. For this reason, they are very readily broken down. However, there is an interest in being able to provide new foodstuffs which possess good antioxidant capacity. In this sense, it would be interesting to be able to provide a composition which comprises polyphenols and can be used as an additive in the preparation of new polyphenol-enriched foodstuffs.

However, it is very common for polyphenol sources (plant products in general) to also include polyphenol oxidase, such that an extract which includes both polyphenols and polyphenol oxidase is always obtained and it is difficult and costly to separate the two.

Polyphenol oxidase (PPO) is the enzyme responsible for the enzymatic browning of fruits and vegetables, which causes a reduction of organoleptic and nutritional properties. Enzymatic browning is a chemical alteration which uses phenolic compounds (monophenols, ortho-diphenols, and polyphenols) as substrates. Enzymatic browning hardly occurs in foods of an animal origin, while it occurs significantly in fruits and vegetables. In foods of this type, enzymatic browning occurs particularly when plant products have sustained damage to their tissues caused by occasional bruising or by aggressions characteristic of some technological treatments: dicing, juice extraction, dehydration, freezing, etc.

It is therefore necessary to develop new methods which yield compositions comprising polyphenols and polyphenol oxidase in which the polyphenol oxidase exhibits lower activity in order to prevent polyphenols from being broken down.

Disclosure of the Invention

The object of the invention is to overcome these drawbacks. This purpose is achieved by means of a method of microencapsulation of a composition comprising polyphenols and polyphenol oxidase, characterized in that it comprises the following steps:

[a] preparing an aqueous solution of chitosan and acetic acid,

[b] preparing a solution of a crosslinking agent from the group consisting of sodium tripolyphosphate and citric acid,

[c] preparing the composition comprising polyphenols and polyphenol oxidase,

[d] mixing the solution of step [a] with the composition of step [c],

[e] adding the solution of step [b] to the mixture of step [d], with stirring and preferably at room temperature,

[f] drying the mixture of step [e] by atomization.

Indeed, by means of the method according to the invention, there are obtained microencapsulated products with a plurality of advantages:

- The wall of the microencapsulated product is resistant to the possible action of polyphenols. In fact, a solution preferred of the invention is for the composition to be of a plant origin, in the sense that it is a composition with a plurality of components of a plant or mixture of plants. Compositions of a plant origin, whether they have all the components present in the plant (or mixture of plants) or constitute an extract of the plant (or mixture of plants), always have a plurality of components. In this sense, the wall of the microencapsulated product does not have to be resistant to the possible action of a single chemical compound (as usually occurs when only a specific molecule or active ingredient is encapsulated), but rather it must be resistant to the plurality of chemical compounds that will be present in the composition, in addition to the various polyphenols and polyphenol oxidase. The wall of the microencapsulated product of the present invention has proven to be resistant to the possible action of all the components present in compositions of a plant origin.

- It allows the microencapsulation of both hydrophilic compositions and lipophilic compositions.

- The microcapsules are gastro-resistant and release their load at intestinal pH, i.e., they present a good gastrointestinal release profile.

- They present good stability over time. In particular, the amount of polyphenols and the antioxidant capacity thereof is preserved, not only after the manufacture but also after long storage periods.

- Polyphenol oxidase activity is reduced.

- Microcapsules with suitable sizes are obtained. In this sense, the microcapsules preferably have a mean size comprised between 5 micra and 50 micra. This value is important given that, as will be seen below, a preferred use of the microencapsulated products obtained according to the invention consists of the addition thereof to food compounds, and the particle size is important because it may affect the organoleptic properties of the food compound.

- The microcapsules are positively charged (with a positive zeta potential).

- The method is suitable for use on an industrial level, i.e., it presents a good atomization performance, good encapsulation efficiency, suitable quality and reproducibility indices, etc.

All this is achieved as a result of the combination of the use of chitosan as the encapsulating material and atomization drying for the formation of the microencapsulated product.

In particular, with regard to polyphenols and polyphenol oxidase, it is particularly interesting to observe that with the method according to the invention, significant deactivation of polyphenol oxidase is achieved without significantly "damaging" the polyphenols. In this sense, the method according to the invention includes atomization drying, which subjects the composition to a high temperature but for a brief period of time and renders an encapsulated product with low water activity. In turn, the pH of the encapsulated composition also seems important in the deactivation of polyphenol oxidase. In this sense, it is advantageous for the pH of the aqueous solution of chitosan and acetic acid to be comprised between 5.1 and 5.7 (preferably between 5.25 and 5.50). It is also advantageous for the free water activity of the microencapsulated product to be comprised between 0.18 and 0.29.

In general, the composition may comprise a plurality of other compounds. For example, it may comprise other enzymes (such as peroxidase) that can also contribute to the breaking down of polyphenols.

In general, with regard to steps [a] (preparing an aqueous solution of chitosan and acetic acid) and [b] (preparing a solution of a crosslinking agent from the group consisting of sodium tripolyphosphate and citric acid), it must be taken into account that in the present invention, it should be understood that "preparing" can simply refer to placing the solutions in suitable containers and/or equipment for subsequent use in the remaining steps of the method (i.e., the simple fine-tuning for use in the following steps of the method) but it may also include the actual generation of the solution itself from the corresponding components.

Advantageously, step [e] has a duration comprised between 20 and 40 minutes.

Preferably, the aqueous solution of chitosan and acetic acid comprises between 1% and 2% by weight of chitosan with respect to the total weight of the solution.

Advantageously, the chitosan has a degree of deacetylation equal to or greater than 90%. The chitosan may be of two origins: animal and plant. Both origins are suitable for use in the method of the invention. In the case of being of an animal origin (preferably from squid), the degree of deacetylation is preferably comprised between 96% and 98%. In the case of being of a plant origin (preferably of a fungal origin), then the degree of deacetylation is preferably equal to or greater than 96%.

Preferably, the chitosan has a viscosity comprised between 200 cP and 1500 cP (centipoises) and very preferably comprised between 300 cP and 1000 cP.

Advantageously, the aqueous solution of chitosan and acetic acid comprises between 0.5% by weight and 1% by weight of acetic acid with respect to the total weight of the solution. In fact, the chitosan in acid medium is converted into a polyelectrolyte by protonation of the NH2 groups present therein. In this sense, it is of interest to add a sufficient amount of acid to assure sufficient protonation of the NH2 groups. Preferably, it comprises between 0.55% by weight and 0.8% by weight of acetic acid with respect to the total weight of the solution. In fact, this second range is around the optimal value, which is 0.6%, and it is the stoichiometric value of acetic acid needed for protonating all the NH2 groups. By adjusting the percentage of acetic acid to the stoichiometric value, using an excess of acetic acid is avoided, which allows problems derived from a high amount of acetic acid, such as bad smells in the obtained microencapsulated product and inadequate viscosities, to be avoided. As indicated above, the obtained optimal value is a 0.6% by weight acetic acid concentration.

Preferably, the crosslinking agent is tripolyphosphate, and advantageously the pH of the solution of the crosslinking agent is comprised between 9.4 and 9.8, and very advantageously between 9.52 and 9.62. At these pH, the chitosan amino groups will be in part neutralized with hydroxyl groups and in part ionically crosslinked, in such a proportion that the release characteristics of the obtained microencapsulated product are the most appropriate characteristics.

Preferably, step [f] of atomization drying is done with an input temperature comprised between 120°C and 154°C, very preferably comprised between 135°C and 154°C, and the atomization time is comprised between 10 s and 60 s, very preferably comprised between 15 s and 30 s. Advantageously, the output temperature is comprised between 84°c and 87°C. Advantageously, aspiration (aspiration ratio) is 90%. Preferably, the feed is 15% (corresponding to a feed flow of 4-5 mL/minute).

A preferred alternative of the method is provided when the composition is hydrophilic. In this case, various advantageous options or alternatives are provided:

- The composition comprises berry pulp, pomegranate *(Punica granatum)* pulp, or a mixture of at least two of the foregoing. It is particularly advantageous for the berry to be a berry from the group consisting of blueberry *(Vaccinium myrtillus),* blackberry *(Rubus ssp),* raspberry *(Rubus idaeus),* and redcurrant *(Ribes rubrum).*

- In step [d], the weight ratio between the solution of step [a] and the composition of step [c] is comprised between 1:0.6 and 1:1.4 and it is preferably 1:1.

- The crosslinking agent is tripolyphosphate and between 0.020% and 0.05% by weight, with respect to the total weight of the mixture of step [e], of tripolyphosphate is added in step [e] to the mixture of step [d]. Preferably, 0.025% is added.

- Step [c] comprises a step of thawing the composition.

- Advantageously, step [c] comprises a step of clarification, preferably enzymatic clarification. This clarification allows a higher amount of polyphenols to be obtained in the composition. Preferably, when the clarification is enzymatic, a pectinase, very preferably polygalacturonase, is used. In the event that the composition comprises berry pulp but does not comprise pomegranate pulp, and when pectinase is used, it is advantageous for the pectinase to be used at a concentration comprised between 0.1% and 0.5% by weight with respect to the total weight of the pulp (and preferably at a 0.2% by weight concentration with respect to the total weight of the pulp) and/or for the pulp to be mixed with the pectinase for 80 to 100 minutes (preferably 90 minutes) and at a temperature of between 45°C and 55°C (preferably 50°C). In the event that the composition comprises pomegranate, it is advantageous for a combination of a pectinase, preferably polygalacturonase, and a cysteine protease, preferably papain, to be used in the step of enzymatic clarification. In this latter case, it is advantageous for the cysteine protease:pectinase ratio in the combination to be comprised between 1:1.6 and 1:2.4 by weight (preferably to be 1:2 by weight) and/or for the combination to be used at a concentration comprised between 0.1% and 0.5% by weight with respect to the total weight of the pulp, preferably at a 0.4% by weight concentration with respect to the total weight of the pulp, wherein, advantageously, the pulp is mixed with the combination for between 110 and 130 minutes (preferably 120 minutes) and at a temperature of between 25°C and 35°C (preferably 30°C).

Another preferred alternative of the method is provided when the composition is hydrophobic (that is, lipophilic). In this case, various advantageous options or alternatives are also provided:

- The composition comprises a hydrophobic compound from the group consisting of argan oil, evening primrose oil, astaxanthin resin, and mixtures of the foregoing, and it preferably comprises a mixture of argan oil and evening primrose oil in equal parts by weight.

- In step [d], the weight ratio between the solution of step [a] and the composition of step [c] is comprised between 2:1 and 1:3. Preferably, it is comprised between 1:1 and 1:2.

- In step [d], a surfactant, preferably polysorbate 80, is additionally added, and very preferably the amount of polysorbate 80 added is comprised between 0.5% and 2% by weight with respect to the total weight of the resulting mixture.

- The crosslinking agent is tripolyphosphate and between 0.020% and 0.05% by weight, with respect to the total weight of the mixture of step [e], is added in step [e] to the mixture of step [d]. Preferably, 0.025% is added.

Another object of the invention is a microencapsulated product characterized in that it comprises a wall of chitosan crosslinked with sodium tripolyphosphate or citric acid inside which there is a composition comprising polyphenols and polyphenol oxidase.

Advantageously, the chitosan has a degree of deacetylation equal to or greater than 90%.

Preferably, the wall is of chitosan crosslinked with tripolyphosphate.

Similar to what has already been described above, there are two advantageous alternatives: that the composition is hydrophilic or hydrophobic. In the event that the composition is hydrophilic, the composition preferably comprises berry pulp, pomegranate pulp, or a mixture of at least two of the foregoing, and advantageously the berry is a berry from the group consisting of blueberry, blackberry, raspberry and redcurrant. In the event that the composition is hydrophobic, it is advantageous for the composition to comprise a hydrophobic compound from the group consisting of argan oil, evening primrose oil, astaxanthin resin, and mixtures of the foregoing and, advantageously, to comprise a mixture of argan oil and evening primrose oil in equal parts by weight.

A further object of the invention is a food compound characterized in that it comprises in its formulation microencapsulated products according to the invention. Preferably, the food compound is chocolate, yoghurt, milk, salad, ice-cream, or fruit juices, and very preferably it is chocolate.

Brief Description of the Drawings

Other advantages and features of the invention will become apparent from the following description in which preferred embodiments of the invention are described in a non-limiting manner in reference to the attached drawings. In the figures:

Figure 1 shows the clarification results for pomegranate pulp.

Figure 2 shows the clarification results for blueberry pulp.

Figure 3 shows the clarification results for blackberry pulp.

Figure 4 shows the clarification results for redcurrant pulp.

Figure 5 shows the results of the first microencapsulation of hydrophilic compositions.

Figure 6 shows the results of the first microencapsulation of hydrophobic compositions.

Figure 7 shows the results of the second microencapsulation of hydrophilic compositions.

Figure 8 shows the reproducibility assay results.

Figure 9 shows the results of the determination of water activity.

Figure 10 shows the results of the second microencapsulation of hydrophobic compositions (argan/evening primrose).

Figure 11 shows the results of the third microencapsulation of hydrophobic compositions (astaxanthin).

Figure 12 shows the results of the determination of the concentration and enzyme activity of polyphenol oxidase (PPO).

Figure 13 shows the results of the third microencapsulation of hydrophilic compositions.

Figure 14 shows the results of the determination of water activity of the third microencapsulation of hydrophilic compositions.

Figure 15 shows the results of the long-term stability of the microcapsules obtained in the reproducibility assays of section 6).

Figure 16 shows the results of the long-term stability of the microcapsules obtained in the third microencapsulation of hydrophilic compositions of section 13).

Figure 17 shows the results of the fourth microencapsulation of hydrophobic compositions (astaxanthin).

Figure 18 shows the results of the fifth microencapsulation of hydrophobic compositions (argan/evening primrose).

Detailed Description of Embodiments of the Invention

1. Enzymatic clarification

Enzymatic clarification assays of compositions comprising on one hand berry pulp and on the other hand pomegranate pulp, were performed. A frozen pulp that was thawed and to which an enzymatic preparation was added was used to start. The mixture was kept in a thermostatic bath with stirring, after which it is centrifuged and filtered.

Three pectinase concentrations (0%, 0.2%, and 0.4%) have been tested with the berries, and the pomegranate has been tested with 1% of pectinase and with 0%, 0.2%, and 0.4% of a mixture of papain and pectinase in a relative proportion of 1:2.

In the case of berries, the temperature of the thermostatic bath was 50°C and the residence time was 1.5 hours. In the case of pomegranate, the temperature of the thermostatic bath was 30°C and the residence time was 2 hours.

In all cases, centrifugation was performed at 6000 r.p.m. for 15 minutes and filtering was performed through a 0.45 micron filter.

The obtained filtered solutions were characterized by means of the following two assays:

a) Quantification of polyphenols: Folin-Ciocalteu (F-C) method

It is based on phenolic compounds reacting with the F-C reagent, at basic pH, giving rise to a blue coloring that can be spectrophotometrically determined at 700 nm (37°C). This reagent contains a mixture of sodium tungstate and sodium molybdate in phosphoric acid and reacts with the phenolic compounds present in the sample, giving rise to a dark blue colored complex. It is quantified based on a standard curve of gallic acid (GA, mg/L).

b) Antioxidant capacity: ABTS method

This method is based on the inhibition by antioxidants of the absorbance of the radical cation of ABTS (2,2'-azinobis-(3-ethylbenzothiazoline-6-sulfonate), a stable green-blue chromophore, which can be spectrophotometrically determined at 405 nm. It is quantified based on a standard curve of Trolox (mM). The activity of hydrophilic and lipophilic compounds can be measured.

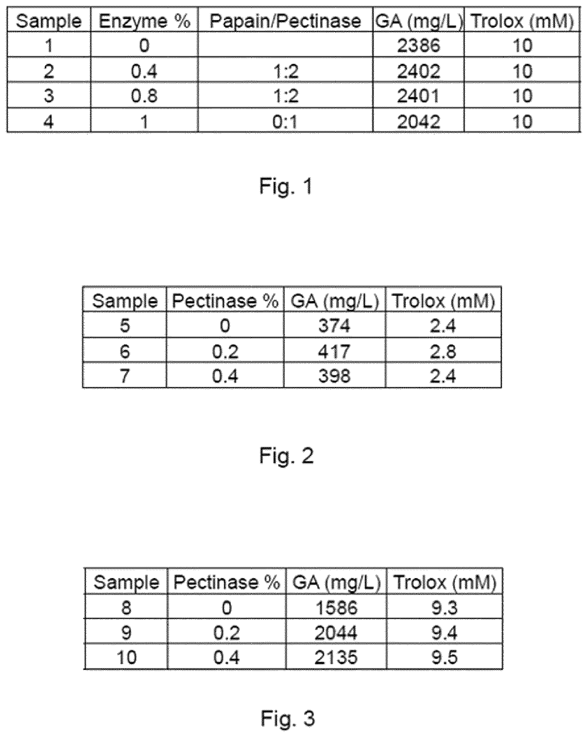

The obtained results are shown in Figures 1 to 4.

2. First microencapsulation of hydrophilic compositions

Microencapsulation assays by means of atomization drying were performed under the following conditions:

Chitosan: of animal origin, with a degree of deacetylation greater than or equal to 90%, viscosity of 300-1000 cP, with various addition percentages.

The chitosan solution has 1% acetic acid.

Crosslinking agent: tripolyphosphate (TPP), with various addition percentages.

Chitosan solution to hydrophilic composition ratio: 1:1 (by volume).

The pre-atomization mixture was made by mixing the chitosan solution with the hydrophilic composition with stirring at 600 r.p.m. for 15 minutes and then slowly adding the crosslinking agent (dropwise) with stirring at 600 r.p.m. for 30 minutes.

Atomization drying was performed with an atomization temperature of 130°C - 150°C, 80% - 95% aspiration, and 10% - 15% feed.

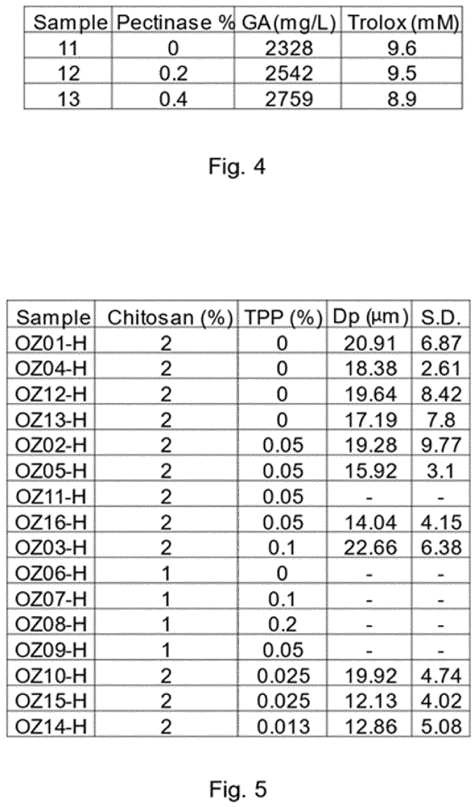

The obtained results are shown in Figure 5, wherein:

Dp is the particle diameter measured by microscopy.
S.D. is the standard deviation of the size measurement.
"-" indicates that a solid could not be collected.

The zeta potential of the obtained microcapsules ranges between +22 and +30 mV.

### 3. First microencapsulation of hydrophobic compositions

Microencapsulation assays by means of atomization drying were performed under the following conditions:

Chitosan: of animal origin, with a degree of deacetylation greater than or equal to 90%, viscosity of 300-1000 cP, with various addition percentages.

The chitosan solution has 1% acetic acid.

Crosslinking agent: tripolyphosphate (TPP), with various addition percentages.

Hydrophobic composition: mixture of argan oil and evening primrose oil in equal parts.

Surfactant: polysorbate 80 (Tween 80), with various addition percentages.

Chitosan solution (shell) to hydrophobic composition (core) ratio: 1:1, 1:2, 1:3 (by volume).

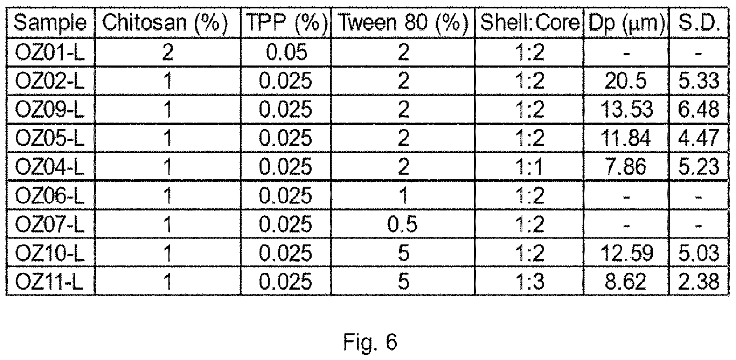

The pre-atomization mixture was made by slowly mixing the chitosan solution with the hydrophobic composition with stirring at 600 r.p.m. for 15 minutes and then slowly adding the crosslinking agent (dropwise) with stirring at 600 r.p.m. for 30 minutes.
Atomization drying was performed with an atomization temperature of 130°C - 150°C, 80% - 95% aspiration, and 10% - 15% feed
The obtained results are shown in Figure 6, wherein:

Dp is the particle diameter measured by microscopy.
S.D. is the standard deviation of the size measurement.
"-" indicates that a solid could not be collected.

The zeta potential of the obtained microcapsules ranges between +16 and +25 mV.

### 4. Gastric resistance

The gastric resistance of the microcapsules obtained in assays 3 and 4 above was determined by visual and optical microscopy inspection, with the following operating procedure:

- 10 g of capsules are added to an aqueous medium at pH = 3 and pH = 4; this is left to interact for one hour and then a base is added until reaching pH 7.5.

It is observed that the microcapsules prepared with TPP hold up in the two media (pH = 3 and pH = 4) for 1 hour. However, the microcapsules prepared without TPP are not resistant to gastric pH.

### 5. Second microencapsulation of hydrophilic compositions

Microencapsulation assays by means of atomization drying were performed under the following conditions:
Chitosan: four different chitosans:

C0: of animal origin, with a degree of deacetylation greater than or equal to 90%, viscosity of 300-1000 cP,

C1: of animal origin, with a degree of deacetylation greater than or equal to 90%, viscosity of 2284 cP,

C2: of animal origin, with a degree of deacetylation greater than or equal to 90%, viscosity of 380 cP,

C3: of plant origin, with a degree of deacetylation greater than or equal to 98%, viscosity of 1000 cP,

Chitosan concentration in the solution: 1% and 2% by weight.

The chitosan solution has 1% acetic acid.

Crosslinking agent: tripolyphosphate (TPP), with two addition percentages (0.025% and 0.05% by weight).

Chitosan solution (shell) to hydrophilic composition (core) ratio: 1:1 (by weight).

The hydrophilic composition is a mixture of pomegranate, blueberry, blackberry, redcurrant, and raspberry pulp, in equal parts, with the following characteristics:

Degrees Brix at 24°C: pomegranate 13.2 - 14.9, blueberry 12.5 - 13, blackberry 8.3 - 9.6, redcurrant 8.9 - 13.2, raspberry 9.2 - 13.2, resulting mixture 10.7 - 11.6.

Content of polyphenols equivalent to gallic acid of the mixture: 2175 - 3804 GA µg/mL.

Antioxidant capacity equivalent to Trolox: 3.7 - 6.5 mM Trolox.

The pre-atomization mixture was made by mixing the chitosan solution with the hydrophilic composition with stirring at 400 r.p.m. for 30 minutes and then slowly adding the crosslinking agent (dropwise) with stirring at 400 r.p.m. for 30 minutes.

Open-loop atomization drying was performed, with an atomization temperature of 150°C, an output temperature between 84°C and 87°C, 90% aspiration, and 15% feed. A 0.7 mm nozzle was used.

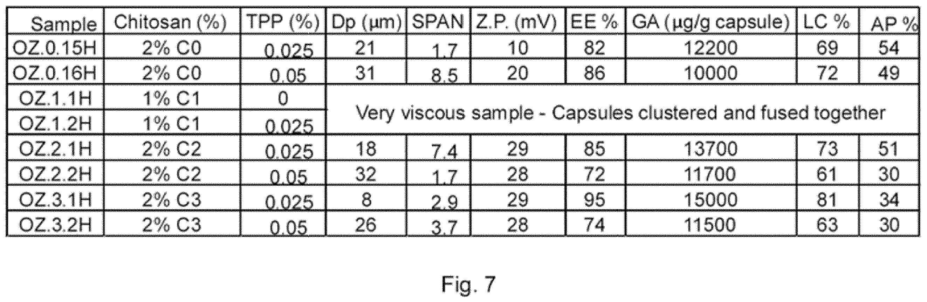

The obtained results are shown in Figure 7, wherein:

Dp is the mean particle diameter measured by laser diffraction.

SPAN is the size measurement range. It is defined as SPAN = (D90-D10)/D50, wherein Dxx is the value of the particle diameter for which the xx% of the particles has the same or a smaller diameter.

Z.P. is zeta potential.

EE is encapsulation efficiency.

LC % is loading capacity.

AP % is atomization performance.

A gastric resistance assay of the chitosan in acid medium was performed on the microcapsules obtained in assays OZ.2.1H, OZ.2.2H, OZ.3.1H, and OZ.3.2H, by visual inspection (turbidity) and optical microscopy. To that end, 10 g of capsules are taken and added to an aqueous medium at pH = 3; this is left to interact for one hour, and then a base is added until reaching pH 7.5. It is observed that the microcapsules hold up at pH = 3 for 1 hour.

6. Reproducibility assays

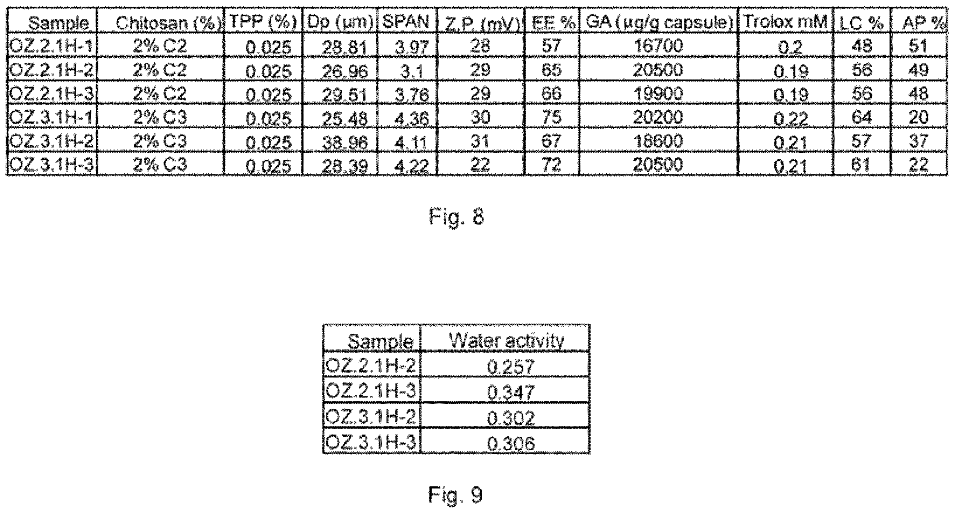

Reproducibility assays for assays OZ.2.1H and OZ.3.1H of section 5) above were performed. The results are shown in Figure 8.

7. Gastrointestinal release assays

Gastrointestinal release assays were performed with the microcapsules obtained in assays OZ.2.1H, OZ.3.1H, OZ.2.1H-1, and OZ.3.1H-1. The conditions of the gastrointestinal release assays were:

Gastric fluid: pH = 2.05, NaCl 60 mM/ HCl, 37°C
Intermediate intestinal fluid: pH = 5.28, 36.5 mM NaHCO3/Acetic Acid, 37°C
Intestinal fluid: pH 7.4, PBS (Phosphate Buffered Saline), 37°C
Dialysis bag: 10-12 KDa
100 mg of microcapsules dispersed in 1 mL of distilled water
Simulated external fluid volume: 30 mL
200 µL aliquots are taken for quantifying polyphenols by the Folin Ciocalteu (F-C) method.

The results show that between 20% and 40% of encapsulated polyphenols are released into simulated gastric medium, and between 20% and 30% are released into simulated intestinal medium (cumulative data).

8 - Determination of water activity

The (free) water activity of the microparticles from assays OZ.2.1H-2, OZ.2.1H-3, OZ.3.1H-2, and OZ.3.2H-3 was determined. The obtained results are shown in Figure 9.

9. Long-term stability

Long-term stability of the microcapsules from assays OZ.2.1H and OZ.3.1H obtained in section 5) above was analyzed. The microcapsules were stored in closed opaque glass bottles for one month at 25°C and with 60% relative humidity. The polyphenol concentration decreases between 15% and 20%.

10. Second microencapsulation of hydrophobic compositions (argan/evening primrose)

Microencapsulation assays by means of atomization drying were performed under the following conditions: Chitosan: two different chitosans:

C2: of animal origin, with a degree of deacetylation greater than or equal to 90%, viscosity of 380 cP,

C3: of plant origin, with a degree of deacetylation greater than or equal to 98%, viscosity of 1000 cP,

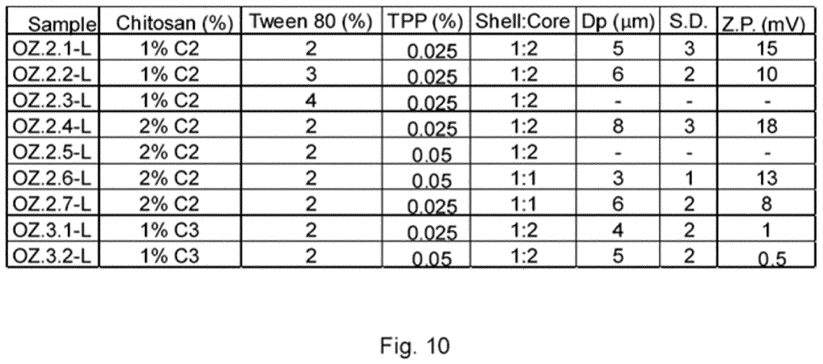

Chitosan concentration in the solution: 1% and 2% by weight.
The chitosan solution has 1% acetic acid.
Crosslinking agent: tripolyphosphate (TPP), with two addition percentages (0.025% and 0.05% by weight).
Surfactant: polysorbate 80 (Tween 80), with various addition percentages.
Chitosan solution (shell) to hydrophobic composition (core) ratio: 1:1 and 1:2 (by weight).
The hydrophobic composition is a mixture of argan oil and evening primrose oil in equal parts.
The pre-atomization mixture was made by mixing the chitosan solution with the hydrophobic composition with stirring at 400 r.p.m. for 30 minutes and then slowly adding the crosslinking agent (dropwise) with stirring at 400 r.p.m. for 30 minutes.
Open-loop atomization drying was performed, with an atomization temperature of 150°C, an output temperature between 84°C and 87°C, 90% aspiration, and 15% feed. A 0.7 mm nozzle was used.
The obtained results are shown in Figure 10, wherein:

Dp is the mean particle diameter measured by laser diffraction.

SD is the standard deviation of the size measurement.

Z.P. is zeta potential.

11. Third microencapsulation of hydrophobic compositions (astaxanthin)

Microencapsulation assays by means of atomization drying were performed under the following conditions: Chitosan: three different chitosans:

C0: of animal origin, with a degree of deacetylation greater than or equal to 90%, viscosity of 300-1000 cP,

C2: of animal origin, with a degree of deacetylation greater than or equal to 90%, viscosity of 380 cP,

C3: of plant origin, with a degree of deacetylation greater than or equal to 98%, viscosity of 1000 cP,

Chitosan concentration in the solution: 1% and 2% by weight.
The chitosan solution has 1% acetic acid.
Crosslinking agent: tripolyphosphate (TPP), 0.025%.
Surfactant: polysorbate 80 (Tween 80), 2% by weight.
Chitosan solution (shell) to hydrophobic composition (core) ratio: various (by weight).

The hydrophobic composition is astaxanthin at 1.5% in ethanol.

The pre-atomization mixture was made by mixing the chitosan solution with the hydrophobic composition with stirring at 400 r.p.m. for 30 minutes and then slowly adding the crosslinking agent (dropwise) with stirring at 400 r.p.m. for 30 minutes.

Open-loop atomization drying was performed, with an atomization temperature of 150°C, an output temperature between 84°C and 87°C, 90% aspiration, and 15% feed. A 0.7 mm nozzle was used.

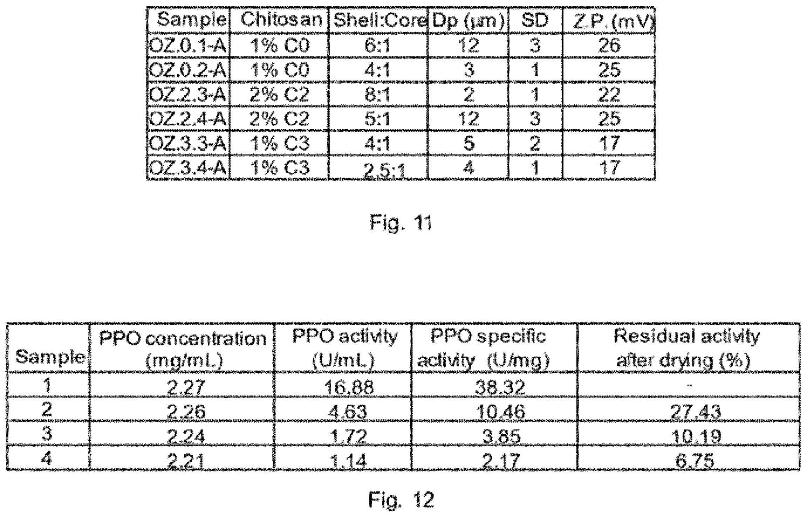

The obtained results are shown in Figure 11.

12. Polyphenol oxidase deactivation

Assays were performed to evaluate the degree of polyphenol oxidase deactivation in the method according to the invention. To that end, polyphenol oxidase was extracted from clarified fruit juice and subjected to the following processes:

a) Direct atomization drying of the extract. Atomization drying was performed under the following conditions: open-loop, with an atomization temperature of 150°C, an output temperature between 84°C and 87°C, 90% aspiration, and 15% feed. A 0.7 mm nozzle was used. The room temperature was 18°C, and the ambient relative humidity was 57%.

b) Encapsulation of the polyphenol oxidase in chitosan and atomization drying. To that end, a C0 chitosan (of animal origin, with a degree of deacetylation greater than or equal to 90%, viscosity of 300-1000 cP) was used. A solution, with 2% of this chitosan and 1% acetic acid, was mixed with polyphenol oxidase extract in equal parts by weight, with stirring at 400 r.p.m. for 30 minutes, and 0.025% triphenyl tripolyphosphate was added, mixing it for 30 minutes at 400 r.p.m. Atomization drying was performed under the following conditions: open-loop, with an atomization temperature of 150°C, an output temperature between 84°C and 87°C, 90% aspiration, and 15% feed. A 0.7 mm nozzle was used. The room temperature was 25°C, and the ambient relative humidity was 34%. The atomized product is subsequently treated with hydrochloric acid to dissolve the chitosan.

Next, polyphenol oxidase concentration and its enzyme activity were determined in the following four cases:

1. Initial extract of polyphenol oxidase.
2. 20 mg polyphenol oxidase obtained in atomization a) with the atomized product treated with 2 mL of distilled water (a dispersion is made).
3. 20 mg polyphenol oxidase obtained in atomization a) with the atomized product treated with 2 mL 0.1 M HCl (a dispersion is made).
4. 20 mg microcapsules of polyphenol oxidase in chitosan obtained in b) treated with 2 mL 0.1 M HCl (to dissolve the chitosan).

The determination of the polyphenol oxidase concentration was performed with the BCA Protein Assay Kit. The results are shown in Figure 12.

The determination of the enzyme activity was performed by mixing 1 mL 0.05 M sodium phosphate pH 6.6 with 0.5 mL 0.175 M catechol (which acts as a substrate) and 0.3 mL of one of samples 1, 2, 3, and 4 above. Next, the absorbance increments in the mixture are measured at 420 nm for 10 minutes. The results are shown in Figure 12.

13. Third microencapsulation of hydrophilic compositions

The main objective of these assays was to determine the viability of reducing the acetic acid content. Microencapsulation assays by means of atomization drying were performed under the following conditions:
Chitosan: two different chitosans:

C3: of plant origin, with a degree of deacetylation greater than or equal to 98%, viscosity of 1000 cP, with a pH of 5.29.

C4: of animal origin, with a degree of deacetylation of 96.92%, viscosity of 300 cP - 1000 cP, with a pH of 5.44.

Chitosan concentration in the solution: 2% by weight.

The chitosan solution has 0.6% acetic acid.

Crosslinking agent: tripolyphosphate (TPP), with an addition percentage (0.025% by weight), with a pH of 9.57.

Chitosan solution (shell) to hydrophilic composition (core) ratio: 1:1 (by weight).

The hydrophilic composition is a mixture of pomegranate, blueberry, blackberry, redcurrant, and raspberry pulp, in equal parts.

The pre-atomization mixture was made by mixing the chitosan solution with the hydrophilic composition with stirring at 400 r.p.m. for 30 minutes and then slowly adding the crosslinking agent (dropwise) with stirring at 400 r.p.m. for 30 minutes.

Open-loop atomization drying was performed, with an atomization temperature of 150°C, an output temperature between 84°C and 87°C, 85% aspiration, and 15% feed. A 0.7 mm nozzle was used. Room temperature and ambient relative humidity of each assay were recorded.

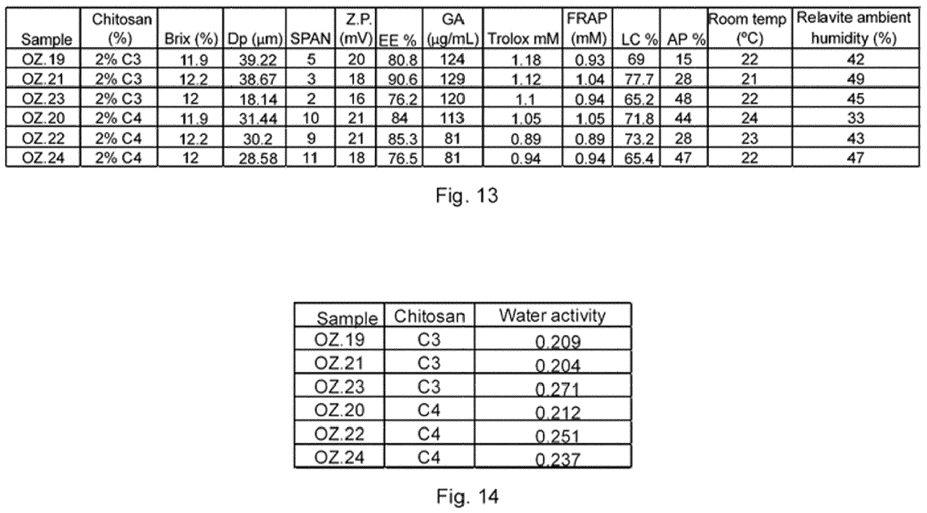

The obtained results are shown in Figure 13, wherein:

Dp is the mean particle diameter measured by laser diffraction.

SPAN is the size measurement range.

Z.P. is zeta potential.

EE is encapsulation efficiency.

LC % is loading capacity.

AP % is atomization performance.

T is room temperature.

RH is ambient relative humidity.

14. Determination of water activity

The (free) water activity of the microparticles from the assays in section 13 above was determined. The obtained results are shown in Figure 14.

15. Long-term stability

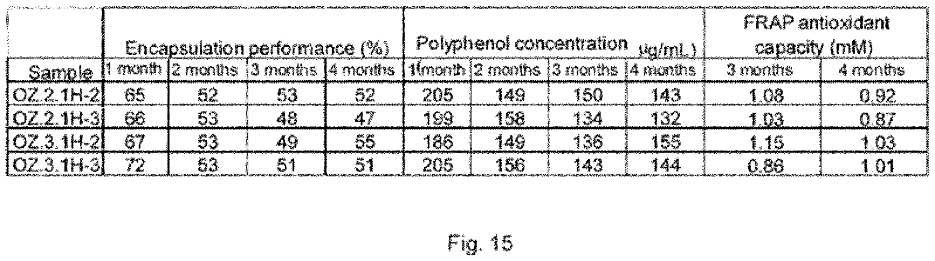

Long-term stability of the microcapsules from assays OZ.2.1H-2, OZ.2.1H-3, OZ.3.1H-2 and OZ.3.1H-3 obtained in section 6) above was analyzed. The microcapsules were stored in closed opaque glass bottles without a vacuum for 1, 2, 3, and 4 months at 25°C and with 60% relative humidity. The results are shown in Figure 15.

16. Long-term stability

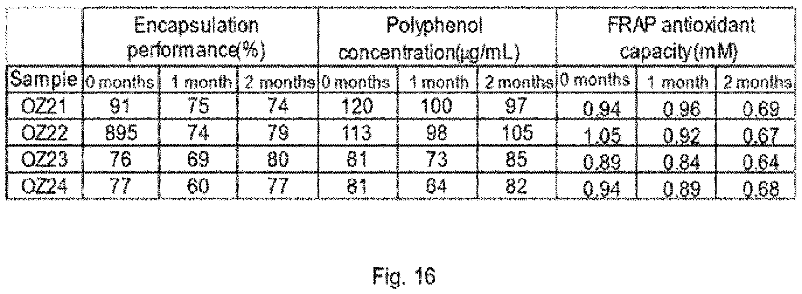

Long-term stability of the microcapsules of the assays OZ21, OZ22, OZ23 and OZ24 obtained in section 13) above was analyzed. The microcapsules were stored in closed glass bottles under a vacuum for 1 and 2 months at 25°C and with 60% relative humidity. The results are shown in Figure 16.

17. Fourth microencapsulation of hydrophobic compositions (astaxanthin)

Microencapsulation assays by means of atomization drying were performed under the following conditions: Chitosan: two different chitosans:

C3: of plant origin, with a degree of deacetylation greater than or equal to 98%, viscosity of 1000 cP.

C4: of animal origin, with a degree of deacetylation of 96.92%, viscosity of 300 cP - 1000 cP, with a pH of 5.44.

Chitosan concentration in the solution: 1% by weight.
The chitosan solution has 0.6% acetic acid.
Crosslinking agent: tripolyphosphate (TPP), 0.025%, pH = 9.57.
Surfactant: polysorbate 80 (Tween 80), without surfactant and with surfactant at 2% by weight with respect to the total weight of the chitosan solution.
Chitosan solution (shell) to hydrophobic composition (core) ratio: 10:1.
The hydrophobic composition is astaxanthin at 1% in ethanol.

The pre-atomization mixture was made by mixing the chitosan solution with the hydrophobic composition with stirring at 400 r.p.m. for 15 minutes, then slowly adding the crosslinking agent (dropwise) in an Ultraturrax stirrer at 8000 r.p.m. for 5 minutes and subsequent mixing with stirring at 400 r.p.m. for 30 minutes.

Closed-loop atomization drying was performed, with an atomization temperature of 150°C, 85% aspiration, and 15% feed. A 0.7 mm nozzle was used.

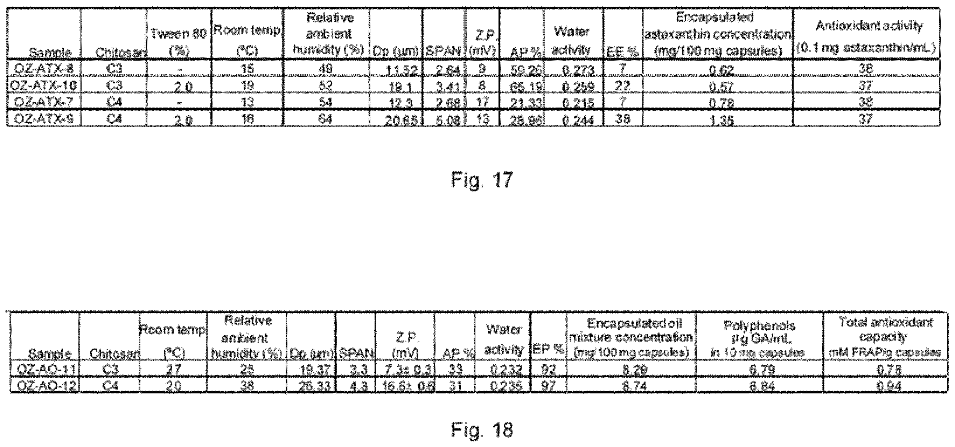

The obtained results are shown in Figure 17, wherein:

Dp is the particle diameter.

SPAN is the size measurement range, as defined above.

Z.P. is zeta potential.

AP % is atomization performance.

EE % is encapsulation efficiency.

18. Fifth microencapsulation of hydrophobic compositions (argan/evening primrose)

Microencapsulation assays by means of atomization drying were performed under the following conditions: Chitosan: two different chitosans:

C3: of plant origin, with a degree of deacetylation greater than or equal to 98%, viscosity of 1000 cP, with a pH of 5.29.

C4: of animal origin, with a degree of deacetylation of 96.92%, viscosity of 300 cP - 1000 cP, with a pH of 5.44.

Chitosan concentration in the solution: 1% by weight.
The chitosan solution has 0.6% of acetic acid.
Crosslinking agent: tripolyphosphate (TPP), 0.025% by weight.
Surfactant: polysorbate 80 (Tween 80), 2% by weight.
Chitosan solution (shell) to hydrophobic composition (core) ratio: 1:0.3 (by weight).
The hydrophobic composition is a mixture of argan oil and evening primrose oil in equal parts.
The pre-atomization mixture was made by mixing the chitosan solution with the hydrophobic composition with stirring at 400 r.p.m. for 15 minutes and then slowly adding the crosslinking agent (dropwise) in an Ultraturrax stirrer at 8000 r.p.m. for 5 minutes and subsequently with stirring at 400 r.p.m. for 30 minutes.
Closed-loop atomization drying was performed, with an atomization temperature of 150°C, 85% aspiration, and 15% feed. A 0.7 mm nozzle was used.
The obtained results are shown in Figure 18, wherein:

Dp is the mean particle diameter measured by laser diffraction.

SPAN is the size measurement range, as defined above.

Z.P. is zeta potential.

AP % is atomization performance.

EP % is encapsulation performance.

Further assays were performed with other chitosan solution (shell) to hydrophobic composition (core) ratios: 1:2, 1:1, 1:0.9, 1:0.7, and 1:0.5 (by weight). However, with the lowest proportions of chitosan, the formation and drying of the capsules was less suitable. Therefore, preferably there are at most 0.6 g of hydrophobic composition per g of chitosan solution, and very preferably there are at most 0.4 g of hydrophobic composition per g of chitosan solution. The results of the fourth microencapsulation of hydrophobic compositions (astaxanthin) (see section 17 above) corroborate and generalize these results for any hydrophobic composition.

## 19. Preparation of food compound (chocolate) with a microencapsulated pulp product

The food matrix is 80% pure chocolate. 60 mg of a microencapsulated pulp product per g of chocolate are added. To that end, 3 g of chocolate are melted in a bain-marie at 45°C, then another 3 g of chocolate are added, and the temperature is taken to 30°C. Next, 360 mg of microcapsules are added with magnetic stirring. The microcapsules disperse correctly without any lumps or pellets being observed.

When preparing chocolate with a microencapsulated product, it is particularly advantageous to add the microencapsulated product during the characteristic chocolate production tempering step.

## 20. Quantification protocols

### 20.1. Polyphenol quantification protocol

#### Individual clarified juice and mixture of clarified juices

The initial sample is diluted 1:16. 20 $\mu$L of the dilution are taken and analyzed in the Folin-Ciocalteu (F-C) kit from the company Bioquochem. 100 $\mu$L of reagent A and 80 $\mu$L of reagent B are added. Absorbance of the samples is measured at 37°C and 700 nm. The indicated polyphenol concentration is the concentration obtained after reversing the 1:16 dilution.

#### Clarified juice encapsulated with chitosan

10 mg of capsules are added to a 1 mL 0.1 M HCl solution. It is left stirring for 1 hour at 400 rpm. A 20 $\mu$L aliquot is taken and analyzed in the Folin-Ciocalteu (F-C) kit from the company Bioquochem. 100 $\mu$L of reagent A and 80 $\mu$L of reagent B are added. Absorbance of the samples is measured at 37°C and 700 nm. The indicated polyphenol concentration is the concentration obtained directly in the kit.

### 20.2. Antioxidant capacity protocol. Trolox

#### Individual clarified juice and mixture of clarified juices

The initial sample is diluted 1:16. 10 $\mu$L of the dilution are taken and analyzed in the Trolox kit (from Sigma Aldrich). 20 $\mu$L of myoglobin, 150 $\mu$L of ABTS, and 100 $\mu$L of STOP solution are added. Absorbance of the samples is measured at 405 nm. The indicated antioxidant capacity is the capacity obtained after reversing the 1:16 dilution.

#### Clarified juice encapsulated with chitosan

10 mg of capsules are added to a 1 mL 0.1 M HCl solution. It is left stirring for 1 hour at 400 rpm. A 10 $\mu$L aliquot is taken and analyzed in the Trolox kit (from Sigma Aldrich). 20 $\mu$L of myoglobin, 150 $\mu$L of ABTS, and 100 $\mu$L of STOP solution are added. Absorbance of the samples is measured at 405 nm. The indicated antioxidant capacity is the capacity obtained directly in the kit.

### 20.3. Antioxidant capacity protocol - FRAP

#### Individual clarified juice and mixture of clarified juices

The initial sample is diluted 1:16. 20 $\mu$L of the dilution are taken and analyzed in the kit of FRAP (from Fisher). 75 $\mu$L of FRAP color solution are added. It is left to incubate for 30 minutes. Absorbance of the samples is measured at 560 nm. The indicated antioxidant capacity is the capacity obtained after reversing the 1:16 dilution.

#### Clarified juice encapsulated with chitosan

10 mg of capsules are added to a 1 mL 0.1 M HCl solution. It is left stirring for 1 hour at 400 rpm. A 20 $\mu$L aliquot is taken and analyzed in the FRAP kit (from Fisher). 75 $\mu$L of FRAP color solution are added. It is left to incubate for 30 minutes. Absorbance of the samples is measured at 560 nm. The indicated antioxidant capacity is the capacity obtained directly in the kit.

20.4. Encapsulation performance. Astaxanthin

20 mg of capsules are dispersed in a dichloromethane-methanol (1:1) mixture. It is stirred at 400 r.p.m. for 1 hour. The sample is centrifuged for 5 min at 6000 r.p.m. and filtered with a 0.4 $\mu$m filter. The supernatant is taken and analyzed in the UV-visible at 478 nm. The calibration curve of astaxanthin (ATX) in dichloromethane-methanol (1:1) is determined.

20.5. Antioxidant activity. Astaxanthin

20 mg of capsules dispersed in 1 mL are added to 2 mL of ethanol with DPPH (2,2-diphenyl-1-picrylhydrazyl) (0.125 mM). It is left stirring for 30 minutes. The samples are centrifuged for 5 minutes at 6000 r.p.m. and filtered with a 0.4 $\mu$m filter. The supernatant is taken and analyzed in the UV-visible at 523 nm. Control: 1 mL of water + 2 mL of DPPH in ethanol. Antioxidant activity is calculated by means of the following equation:

$$AA\ (\%) = (Control\ A - Sample\ A)/(Control\ A) \times 100$$

wherein

AA is antioxidant activity
A is absorption (at 523 nm)

**Claims**

1. A method of microencapsulation of a composition comprising polyphenols and polyphenol oxidase, **characterized in that** it comprises the following steps:

   [a] preparing an aqueous solution of chitosan and acetic acid,
   [b] preparing a solution of a crosslinking agent from the group consisting of sodium tripolyphosphate and citric acid,
   [c] preparing said composition comprising polyphenols and polyphenol oxidase,
   [d] mixing the solution of step [a] with the composition of step [c],
   [e] adding the solution of step [b] to the mixture of step [d], with stirring, and preferably at room temperature,
   [f] drying the mixture of step [e] by atomization.

2. The method according to claim 1, **characterized in that** said aqueous solution of chitosan and acetic acid comprises between 1% and 2% by weight of chitosan with respect to the total weight of the solution.

3. The method according to one of claims 1 or 2, **characterized in that** said chitosan has a degree of deacetylation equal to or greater than 90%.

4. The method according to any one of claims 1 to 3, **characterized in that** said chitosan has a viscosity comprised between 200 cP and 1500 cP, and preferably comprised between 300 cP and 1000 cP.

5. The method according to any one of claims 1 to 4, **characterized in that** said aqueous solution of chitosan and acetic acid comprises between 0.5% by weight and 1% by weight of acetic acid with respect to the total weight of the solution, and preferably comprises between 0.55% by weight and 0.8% by weight of acetic acid with respect to the total weight of the solution.

6. The method according to any one of claims 1 to 5, **characterized in that** said crosslinking agent is tripolyphosphate.

7. The method according to any one of claims 1 to 6, **characterized in that** said step [f] of atomization drying is done with an input temperature comprised between 120°C and 154°C, preferably comprised between 135°C and 154°C, and the atomization time is comprised between 10 s and 60 s, preferably comprised between 15 s and 30 s.

8. The method according to any one of claims 1 to 7, **characterized in that** said composition is hydrophilic.

9. The method according to claim 8, **characterized in that** in said step [d] the weight ratio between said solution of step [a] and said composition of step [c] is 1:1.

10. The method according to one of claims 8 or 9, **characterized in that** said crosslinking agent is tripolyphosphate, and between 0.020% and 0.05% by weight, with respect to the total weight of the mixture of step [e], of tripolyphosphate is added in said step [e] to the mixture of step [d].

11. The method according to any one of claims 8 to 10, **characterized in that** said composition comprises berry pulp, pomegranate pulp, or a mixture of at least two of the foregoing, wherein said berry is preferably a berry from the group consisting of blueberry, blackberry, raspberry, and redcurrant.

12. The method according to claim 11, **characterized in that** said step [c] comprises a step of clarification, preferably an enzymatic clarification.

13. The method according to any one of claims 1 to 7, **characterized in that** said composition is hydrophobic.

14. The method according to claim 13, **characterized in that** said composition comprises a hydrophobic compound from the group consisting of argan oil, evening primrose oil, astaxanthin resin, and mixtures of the foregoing, and it preferably comprises a mixture of argan oil and evening primrose oil in equal parts by weight.

15. The method according to one of claims 13 or 14, **characterized in that** in said step [d] the weight ratio between said solution of step [a] and said composition of step [c] is comprised between 1:1 and 1:2.

16. The method according to any one of claims 13 to 15, **characterized in that** said crosslinking agent is tripolyphosphate, and between 0.020% and 0.05% by weight, with respect to the total weight of the mixture of step [e], of tripolyphosphate is added in said step [e] to the mixture of step [d].

17. A microencapsulated product, **characterized in that** it comprises a wall of chitosan crosslinked with sodium tripolyphosphate or citric acid inside which there is a composition comprising polyphenols and polyphenol oxidase.

18. A food compound, **characterized in that** it comprises in its formulation microencapsulated products according to claim 17, wherein said food compound is preferably chocolate.

| Sample | Enzyme % | Papain/Pectinase | GA (mg/L) | Trolox (mM) |
|--------|----------|------------------|-----------|-------------|
| 1 | 0 | | 2386 | 10 |
| 2 | 0.4 | 1:2 | 2402 | 10 |
| 3 | 0.8 | 1:2 | 2401 | 10 |
| 4 | 1 | 0:1 | 2042 | 10 |

Fig. 1

| Sample | Pectinase % | GA (mg/L) | Trolox (mM) |
|--------|-------------|-----------|-------------|
| 5 | 0 | 374 | 2.4 |
| 6 | 0.2 | 417 | 2.8 |
| 7 | 0.4 | 398 | 2.4 |

Fig. 2

| Sample | Pectinase % | GA (mg/L) | Trolox (mM) |
|--------|-------------|-----------|-------------|
| 8 | 0 | 1586 | 9.3 |
| 9 | 0.2 | 2044 | 9.4 |
| 10 | 0.4 | 2135 | 9.5 |

Fig. 3

| Sample | Pectinase % | GA (mg/L) | Trolox (mM) |
|--------|-------------|-----------|-------------|
| 11 | 0 | 2328 | 9.6 |
| 12 | 0.2 | 2542 | 9.5 |
| 13 | 0.4 | 2759 | 8.9 |

Fig. 4

| Sample | Chitosan (%) | TPP (%) | Dp (μm) | S.D. |
|--------|--------------|---------|---------|------|
| OZ01-H | 2 | 0 | 20.91 | 6.87 |
| OZ04-H | 2 | 0 | 18.38 | 2.61 |
| OZ12-H | 2 | 0 | 19.64 | 8.42 |
| OZ13-H | 2 | 0 | 17.19 | 7.8 |
| OZ02-H | 2 | 0.05 | 19.28 | 9.77 |
| OZ05-H | 2 | 0.05 | 15.92 | 3.1 |
| OZ11-H | 2 | 0.05 | - | - |
| OZ16-H | 2 | 0.05 | 14.04 | 4.15 |
| OZ03-H | 2 | 0.1 | 22.66 | 6.38 |
| OZ06-H | 1 | 0 | - | - |
| OZ07-H | 1 | 0.1 | - | - |
| OZ08-H | 1 | 0.2 | - | - |
| OZ09-H | 1 | 0.05 | - | - |
| OZ10-H | 2 | 0.025 | 19.92 | 4.74 |
| OZ15-H | 2 | 0.025 | 12.13 | 4.02 |
| OZ14-H | 2 | 0.013 | 12.86 | 5.08 |

Fig. 5

| Sample | Chitosan (%) | TPP (%) | Tween 80 (%) | Shell:Core | Dp (μm) | S.D. |
|---|---|---|---|---|---|---|
| OZ01-L | 2 | 0.05 | 2 | 1:2 | - | - |
| OZ02-L | 1 | 0.025 | 2 | 1:2 | 20.5 | 5.33 |
| OZ09-L | 1 | 0.025 | 2 | 1:2 | 13.53 | 6.48 |
| OZ05-L | 1 | 0.025 | 2 | 1:2 | 11.84 | 4.47 |
| OZ04-L | 1 | 0.025 | 2 | 1:1 | 7.86 | 5.23 |
| OZ06-L | 1 | 0.025 | 1 | 1:2 | - | - |
| OZ07-L | 1 | 0.025 | 0.5 | 1:2 | - | - |
| OZ10-L | 1 | 0.025 | 5 | 1:2 | 12.59 | 5.03 |
| OZ11-L | 1 | 0.025 | 5 | 1:3 | 8.62 | 2.38 |

Fig. 6

| Sample | Chitosan (%) | TPP (%) | Dp (μm) | SPAN | Z.P. (mV) | EE % | GA (μg/g capsule) | LC % | AP % |
|---|---|---|---|---|---|---|---|---|---|
| OZ.0.15H | 2% C0 | 0.025 | 21 | 1.7 | 10 | 82 | 12200 | 69 | 54 |
| OZ.0.16H | 2% C0 | 0.05 | 31 | 8.5 | 20 | 86 | 10000 | 72 | 49 |
| OZ.1.1H | 1% C1 | 0 | Very viscous sample - Capsules clustered and fused together | | | | | | |
| OZ.1.2H | 1% C1 | 0.025 | | | | | | | |
| OZ.2.1H | 2% C2 | 0.025 | 18 | 7.4 | 29 | 85 | 13700 | 73 | 51 |
| OZ.2.2H | 2% C2 | 0.05 | 32 | 1.7 | 28 | 72 | 11700 | 61 | 30 |
| OZ.3.1H | 2% C3 | 0.025 | 8 | 2.9 | 29 | 95 | 15000 | 81 | 34 |
| OZ.3.2H | 2% C3 | 0.05 | 26 | 3.7 | 28 | 74 | 11500 | 63 | 30 |

Fig. 7

| Sample | Chitosan (%) | TPP (%) | Dp (μm) | SPAN | Z.P. (mV) | EE % | GA (μg/g capsule) | Trolox mM | LC % | AP % |
|---|---|---|---|---|---|---|---|---|---|---|
| OZ.2.1H-1 | 2% C2 | 0.025 | 28.81 | 3.97 | 28 | 57 | 16700 | 0.2 | 48 | 51 |
| OZ.2.1H-2 | 2% C2 | 0.025 | 26.96 | 3.1 | 29 | 65 | 20500 | 0.19 | 56 | 49 |
| OZ.2.1H-3 | 2% C2 | 0.025 | 29.51 | 3.76 | 29 | 66 | 19900 | 0.19 | 56 | 48 |
| OZ.3.1H-1 | 2% C3 | 0.025 | 25.48 | 4.36 | 30 | 75 | 20200 | 0.22 | 64 | 20 |
| OZ.3.1H-2 | 2% C3 | 0.025 | 38.96 | 4.11 | 31 | 67 | 18600 | 0.21 | 57 | 37 |
| OZ.3.1H-3 | 2% C3 | 0.025 | 28.39 | 4.22 | 22 | 72 | 20500 | 0.21 | 61 | 22 |

Fig. 8

EP 4 124 247 A1

| Sample | Water activity |
|---|---|
| OZ.2.1H-2 | 0.257 |
| OZ.2.1H-3 | 0.347 |
| OZ.3.1H-2 | 0.302 |
| OZ.3.1H-3 | 0.306 |

Fig. 9

| Sample | Chitosan (%) | Tween 80 (%) | TPP (%) | Shell:Core | Dp (μm) | S.D. | Z.P. (mV) |
|---|---|---|---|---|---|---|---|
| OZ.2.1-L | 1% C2 | 2 | 0.025 | 1:2 | 5 | 3 | 15 |
| OZ.2.2-L | 1% C2 | 3 | 0.025 | 1:2 | 6 | 2 | 10 |
| OZ.2.3-L | 1% C2 | 4 | 0.025 | 1:2 | - | - | - |
| OZ.2.4-L | 2% C2 | 2 | 0.025 | 1:2 | 8 | 3 | 18 |
| OZ.2.5-L | 2% C2 | 2 | 0.05 | 1:2 | - | - | - |
| OZ.2.6-L | 2% C2 | 2 | 0.05 | 1:1 | 3 | 1 | 13 |
| OZ.2.7-L | 2% C2 | 2 | 0.025 | 1:1 | 6 | 2 | 8 |
| OZ.3.1-L | 1% C3 | 2 | 0.025 | 1:2 | 4 | 2 | 1 |
| OZ.3.2-L | 1% C3 | 2 | 0.05 | 1:2 | 5 | 2 | 0.5 |

Fig. 10

| Sample | Chitosan | Shell:Core | Dp (µm) | SD | Z.P. (mV) |
|---|---|---|---|---|---|
| OZ.0.1-A | 1% C0 | 6:1 | 12 | 3 | 26 |
| OZ.0.2-A | 1% C0 | 4:1 | 3 | 1 | 25 |
| OZ.2.3-A | 2% C2 | 8:1 | 2 | 1 | 22 |
| OZ.2.4-A | 2% C2 | 5:1 | 12 | 3 | 25 |
| OZ.3.3-A | 1% C3 | 4:1 | 5 | 2 | 17 |
| OZ.3.4-A | 1% C3 | 2.5:1 | 4 | 1 | 17 |

Fig. 11

EP 4 124 247 A1

| Sample | PPO concentration (mg/mL) | PPO activity (U/mL) | PPO specific activity (U/mg) | Residual activity after drying (%) |
|---|---|---|---|---|
| 1 | 2.27 | 16.88 | 38.32 | - |
| 2 | 2.26 | 4.63 | 10.46 | 27.43 |
| 3 | 2.24 | 1.72 | 3.85 | 10.19 |
| 4 | 2.21 | 1.14 | 2.17 | 6.75 |

Fig. 12

| Sample | Chitosan (%) | Brix (%) | Dp (µm) | SPAN | Z.P. (mV) | EE % | GA (µg/mL) | Trolox mM | FRAP (mM) | LC % | AP % | Room temp (°C) | Relavite ambient humidity (%) |
|---|---|---|---|---|---|---|---|---|---|---|---|---|---|
| OZ.19 | 2% C3 | 11.9 | 39.22 | 5 | 20 | 80.8 | 124 | 1.18 | 0.93 | 69 | 15 | 22 | 42 |
| OZ.21 | 2% C3 | 12.2 | 38.67 | 3 | 18 | 90.6 | 129 | 1.12 | 1.04 | 77.7 | 28 | 21 | 49 |
| OZ.23 | 2% C3 | 12 | 18.14 | 2 | 16 | 76.2 | 120 | 1.1 | 0.94 | 65.2 | 48 | 22 | 45 |
| OZ.20 | 2% C4 | 11.9 | 31.44 | 10 | 21 | 84 | 113 | 1.05 | 1.05 | 71.8 | 44 | 24 | 33 |
| OZ.22 | 2% C4 | 12.2 | 30.2 | 9 | 21 | 85.3 | 81 | 0.89 | 0.89 | 73.2 | 28 | 23 | 43 |
| OZ.24 | 2% C4 | 12 | 28.58 | 11 | 18 | 76.5 | 81 | 0.94 | 0.94 | 65.4 | 47 | 22 | 47 |

Fig. 13

| Sample | Chitosan | Water activity |
|---|---|---|
| OZ.19 | C3 | 0.209 |
| OZ.21 | C3 | 0.204 |
| OZ.23 | C3 | 0.271 |
| OZ.20 | C4 | 0.212 |
| OZ.22 | C4 | 0.251 |
| OZ.24 | C4 | 0.237 |

Fig. 14

| Sample | Encapsulation performance (%) | | | | Polyphenol concentration (µg/mL) | | | | FRAP antioxidant capacity (mM) | |
|---|---|---|---|---|---|---|---|---|---|---|
| | 1 month | 2 months | 3 months | 4 months | 1 month | 2 months | 3 months | 4 months | 3 months | 4 months |
| OZ.2.1H-2 | 65 | 52 | 53 | 52 | 205 | 149 | 150 | 143 | 1.08 | 0.92 |
| OZ.2.1H-3 | 66 | 53 | 48 | 47 | 199 | 158 | 134 | 132 | 1.03 | 0.87 |
| OZ.3.1H-2 | 67 | 53 | 49 | 55 | 186 | 149 | 136 | 155 | 1.15 | 1.03 |
| OZ.3.1H-3 | 72 | 53 | 51 | 51 | 205 | 156 | 143 | 144 | 0.86 | 1.01 |

Fig. 15

| Sample | Encapsulation performance(%) | | | Polyphenol concentration(μg/mL) | | | FRAP antioxidant capacity(mM) | | |
|---|---|---|---|---|---|---|---|---|---|
| | 0 months | 1 month | 2 months | 0 months | 1 month | 2 months | 0 months | 1 month | 2 months |
| OZ21 | 91 | 75 | 74 | 120 | 100 | 97 | 0.94 | 0.96 | 0.69 |
| OZ22 | 895 | 74 | 79 | 113 | 98 | 105 | 1.05 | 0.92 | 0.67 |
| OZ23 | 76 | 69 | 80 | 81 | 73 | 85 | 0.89 | 0.84 | 0.64 |
| OZ24 | 77 | 60 | 77 | 81 | 64 | 82 | 0.94 | 0.89 | 0.68 |

Fig. 16

| Sample | Chitosan | Tween 80 (%) | Room temp (°C) | Relative ambient humidity (%) | Dp (µm) | SPAN | Z.P (mV) | AP % | Water activity | EE % | Encapsulated astaxanthin concentration (mg/100 mg capsules) | Antioxidant activity (0.1 mg astaxanthin/mL) |
|---|---|---|---|---|---|---|---|---|---|---|---|---|
| OZ-ATX-8 | C3 | - | 15 | 49 | 11.52 | 2.64 | 9 | 59.26 | 0.273 | 7 | 0.62 | 38 |
| OZ-ATX-10 | C3 | 2.0 | 19 | 52 | 19.1 | 3.41 | 8 | 65.19 | 0.259 | 22 | 0.57 | 37 |
| OZ-ATX-7 | C4 | - | 13 | 54 | 12.3 | 2.68 | 17 | 21.33 | 0.215 | 7 | 0.78 | 38 |
| OZ-ATX-9 | C4 | 2.0 | 16 | 64 | 20.65 | 5.08 | 13 | 28.96 | 0.244 | 38 | 1.35 | 37 |

Fig. 17

| Sample | Chitosan | Room temp (°C) | Relative ambient humidity (%) | Dp (µm) | SPAN | Z.P. (mV) | AP % | Water activity | EP % | Encapsulated oil mixture concentration (mg/100 mg capsules) | Polyphenols µg GA/mL in 10 mg capsules | Total antioxidant capacity mM FRAP/g capsules |
|---|---|---|---|---|---|---|---|---|---|---|---|---|
| OZ-AO-11 | C3 | 27 | 25 | 19.37 | 3.3 | 7.3± 0.3 | 33 | 0.232 | 92 | 8.29 | 6.79 | 0.78 |
| OZ-AO-12 | C4 | 20 | 38 | 26.33 | 4.3 | 16.6± 0.6 | 31 | 0.235 | 97 | 8.74 | 6.84 | 0.94 |

Fig. 18

Europäisches
Patentamt

European
Patent Office

Office européen
des brevets

# EUROPEAN SEARCH REPORT

**Application Number**

EP 21 38 2726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARRIS R ET AL: "Chitosan nanoparticles and microspheres for the encapsulation of natural antioxidants extracted from", CARBOHYDRATE POLYMERS, APPLIED SCIENCE PUBLISHERS , LTD BARKING, GB, vol. 84, no. 2, 1 July 2010 (2010-07-01), pages 803-806, XP028359696, ISSN: 0144-8617, DOI: 10.1016/J.CARBPOL.2010.07.003 [retrieved on 2010-07-08] * page 804, paragraphs 2.1., 2.2. * | 17 | INV. A23L33/105 A23B7/16 A23L19/00 A23P10/30 |
| X | VANDEN BRABER NOELIA L ET AL: "Controlled release and antioxidant activity of chitosan or its glucosamine water-soluble derivative microcapsules loaded with quercetin", INTERNATIONAL JOURNAL OF BIOLOGICAL MACROMOLECULES, ELSEVIER BV, NL, vol. 112, 5 February 2018 (2018-02-05), pages 399-404, XP085370884, ISSN: 0141-8130, DOI: 10.1016/J.IJBIOMAC.2018.01.085 * page 400, paragraph 2.3. * | 1-18 | |
| X | WANG WENJIE ET AL: "Chitosan-cellulose nanocrystal microencapsulation to improve encapsulation efficiency and stability of entrapped fruit anthocyanins", CARBOHYDRATE POLYMERS, APPLIED SCIENCE PUBLISHERS , LTD BARKING, GB, vol. 157, 5 November 2016 (2016-11-05), pages 1246-1253, XP029848703, ISSN: 0144-8617, DOI: 10.1016/J.CARBPOL.2016.11.005 * page 1247, paragraphs 2.1., 2.2.; figure 1 * | 17 | TECHNICAL FIELDS SEARCHED (IPC) A23L A23P A23B |

-/--

The present search report has been drawn up for all claims

| Place of search | Date of completion of the search | Examiner |
|---|---|---|
| The Hague | 14 December 2021 | Galleiske, Anke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 3**

**EUROPEAN SEARCH REPORT**

Application Number

EP 21 38 2726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BRAGA MATHEUS BOEIRA ET AL: "Evaluation of freeze-dried milk-blackberry pulp mixture: Influence of adjuvants over the physical properties of the powder, anthocyanin content and antioxidant activity", FOOD RESEARCH INTERNATIONAL, ELSEVIER, AMSTERDAM, NL, vol. 125, 12 July 2019 (2019-07-12), pages 1-12, XP085833645, ISSN: 0963-9969, DOI: 10.1016/J.FOODRES.2019.108557 [retrieved on 2019-07-12] * page 1, paragraph 1. * ----- | 1-18 | |
| A | HOSSEINI HAMED ET AL: "Introducing nano/microencapsulated bioactive ingredients for extending the shelf-life of food products", ADVANCES IN COLLOID AND INTERFACE SCIENCE, ELSEVIER, NL, vol. 282, 12 July 2020 (2020-07-12), XP086236203, ISSN: 0001-8686, DOI: 10.1016/J.CIS.2020.102210 [retrieved on 2020-07-12] * page 16; table 2 * ----- | 1-18 | TECHNICAL FIELDS SEARCHED (IPC) |
| | -/-- | | |

The present search report has been drawn up for all claims

| Place of search | Date of completion of the search | Examiner |
|---|---|---|
| The Hague | 14 December 2021 | Galleiske, Anke |

EPO FORM 1503 03.82 (P04C01)

page 2 of 3

Europäisches
Patentamt

European
Patent Office

Office européen
des brevets

# EUROPEAN SEARCH REPORT

**Application Number**

**EP 21 38 2726**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DORDEVIC VERICA ET AL: "Trends in Encapsulation Technologies for Delivery of Food Bioactive Compounds", FOOD ENGINEERING REVIEWS, SPRINGER, US, vol. 7, no. 4, 25 December 2014 (2014-12-25), pages 452-490, XP035580091, ISSN: 1866-7910, DOI: 10.1007/S12393-014-9106-7 [retrieved on 2014-12-25] * page 477 * ----- | 1-18 | |
| A | DESAI KASHAPPA GOUD H. ET AL: "Preparation and characterization of drug-loaded chitosan-tripolyphosphate microspheres by spray drying", DRUG DEVELOPMENT RESEARCH., vol. 64, no. 2, 1 January 2005 (2005-01-01), pages 114-128, XP055869782, US ISSN: 0272-4391, DOI: 10.1002/ddr.10416 * page 116 * ----- | 1-18 | TECHNICAL FIELDS SEARCHED (IPC) |

The present search report has been drawn up for all claims

| Place of search | Date of completion of the search | Examiner |
|---|---|---|
| The Hague | 14 December 2021 | Galleiske, Anke |

EPO FORM 1503 03.82 (P04C01)